# EUROPEAN PATENT APPLICATION

(11) **EP 4 145 109 A1**
(43) Date of publication of application: **08.03.2023**
(21) Application number: 21796043.4
(22) Date of filing: 26.03.2021
(51) Int. Cl.: G01N 15/00, G01N 15/06, G01N 21/17

(54) **COUNTING METHOD AND COUNTING DEVICE**

(30) Priority: 28.04.2020 JP 2020078981
(71) Applicant: Panasonic Intellectual Property Management Co., Ltd., Osaka-shi, Osaka 540-6207 (JP)
(72) Inventor: HIRAOKA, Rui, Osaka-shi, Osaka 540-6207 (JP); ARIMOTO, Satoshi, Osaka-shi, Osaka 540-6207 (JP)
(74) Representative: Eisenführ Speiser
(86) International application number: PCT/JP2021/013078
(87) International publication number: WO 2021/220689

(57) **Abstract**

A counting method includes an aggregation step (S110) of aggregating particles (15) in a sample (10) by the action of first dielectrophoretic force, a dispersion step (S120) of dispersing the aggregated particles (15) by the action of second dielectrophoretic force, which is different from the first dielectrophoretic force, an imaging step (S130) of capturing a dispersion image including the dispersed particles (15), and a counting step (S140) of determining the number of particles (15) on the basis of the dispersion image.

## Description

### Technical Field

The present disclosure relates to a counting method and a counting apparatus for counting particles contained in a sample.

### Background Art

A counting method for counting dielectric particles contained in a sample solution by collecting the dielectric particles in the sample solution through dielectrophoresis and analyzing an image of areas where the dielectric particles have been collected is known (refer to PTL 1).

### Citation List

### Patent Literature

PTL 1: Japanese Unexamined Patent Application Publication No. 2017-70281

### Summary of Invention

With the counting method disclosed in PTL 1, however, accurate counting might not be performed when a large number of dielectric particles exist in a sample, because false negatives might occur.

The present disclosure, therefore, provides a counting method and the like capable of reducing occurrence of false negatives and counting particles more accurately.

A counting method according to an aspect of the present disclosure includes an aggregation step of aggregating particles in a sample by action of first dielectrophoretic force, a dispersion step of dispersing the aggregated particles by action of second dielectrophoretic force, which is different from the first dielectrophoretic force, an imaging step of capturing a dispersion image including the dispersed particles, and a counting step of determining a number of the particles on a basis of the dispersion image. Magnitude of the second dielectrophoretic force is 0 or smaller than magnitude of the first dielectrophoretic force.

A counting apparatus according to an aspect of the present disclosure includes a storage unit storing a sample containing particles, an electric field gradient generation unit that generates an electric field gradient for the sample stored in the storage unit, a control unit that controls the electric field gradient generation unit such that the generated electric field gradient aggregates the particles by action of first-direction dielectrophoretic force exerted on the particles and disperses the aggregated particles by action of second-direction dielectrophoretic force, which is different from the first-direction dielectrophoretic force, exerted on the aggregated particles, an imaging unit that captures a dispersion image including the dispersed particles, and a counting unit that determines a number of the particles on a basis of the dispersion image. Magnitude of the second dielectrophoretic force is 0 or smaller than magnitude of the first dielectrophoretic force.

It should be noted that these general or specific aspects may be implemented as a system, an apparatus, an integrated circuit, a computer program, a computer-readable storage medium such as a CD-ROM, or any selective combination of a method, an apparatus, a system, a method, an integrated circuit, a computer program, and a storage medium. The computer-readable storage medium includes, for example, a nonvolatile storage medium such as a CD-ROM (compact disc-read only memory).

With the counting method and the like in the present disclosure, particles can be counted more accurately.

### Brief Description of Drawings

[Fig. 1] Fig. 1 is a perspective view illustrating a schematic configuration of a counting apparatus according to an embodiment.
[Fig. 2] Fig. 2 is a cross-sectional view illustrating the schematic configuration of the counting apparatus according to the embodiment.
[Fig. 3] Fig. 3 is a plan view illustrating the configuration of an electrode set according to the embodiment.
[Fig. 4] Fig. 4 is a diagram illustrating aggregation and dispersion of particles according to the embodiment.
[Fig. 5] Fig. 5 is a first diagram illustrating a change in dielectrophoretic force according to the embodiment.
[Fig. 6] Fig. 6 is a second diagram illustrating a change in dielectrophoretic force according to the embodiment.
[Fig. 7A] Fig. 7A is a third diagram illustrating a change in dielectrophoretic force according to the embodiment.
[Fig. 7B] Fig. 7B is a fourth diagram illustrating a change in dielectrophoretic force according to the embodiment.
[Fig. 8] Fig. 8 is a flowchart illustrating a counting method according to the embodiment.
[Fig. 9] Fig. 9 is a flowchart illustrating a counting method according to a modification of the embodiment.
[Fig. 10] Fig. 10 is a diagram illustrating an aggregation image and a dispersion image according to the modification of the embodiment.
[Fig. 11] Fig. 11 is a diagram illustrating a tracking step according to the modification of the embodiment.
[Fig. 12] Fig. 12 is a diagram illustrating a process for forming a composite according to the modification of the embodiment.

### Description of Embodiments

### (Underlying Knowledge Forming Basis of Disclosure)

A technique employing dielectrophoresis is known as a counting method for counting particles contained in a sample (hereinafter also referred to as a sample solution). For example, PTL 1 discloses a counting method for counting dielectric particles, which are particles to be counted, through dielectrophoresis. More specifically, in PTL 1, dielectric particles contained in a sample solution are counted by collecting dielectric particles in each of slit areas through dielectrophoresis and counting the number of slit areas saturated by the dielectric particles.

In general, dielectrophoresis is, as described above, a technique for collecting (i.e., aggregating) dielectric particles in certain areas, and the dielectric particles can be moved only to the certain areas. When a large number of dielectric particles exist in a sample, therefore, the large number of dielectric particles are aggregated in certain areas and accumulated in three dimensions. That is, with an image captured by an imaging device or the like from one direction, it is difficult to identify overlaps between dielectric particles caused by accumulation, and dielectric particles fewer than an actual number of dielectric particles contained are counted, that is, false negatives occur.

Due to these circumstances, it has been difficult to count dielectric particles accurately with conventional counting methods as known in PTL 1 and the like.

In a counting method and the like according to the present disclosure, therefore, aggregations caused by first dielectrophoresis (i.e., first dielectrophoretic force) are dispersed by performing second dielectrophoresis (i.e., second dielectrophoretic force) on particles aggregated by the action of the first dielectrophoresis. As a result, with the counting method and the like according to the present disclosure, particles can be counted with an effect of overlap between the particles reduced, and occurrence of false negatives due to aggregation is reduced, which makes it possible to count the particles more accurately.

### (Outline of Disclosure)

A counting method according to an aspect of the present disclosure includes an aggregation step of aggregating particles in a sample by action of first dielectrophoretic force, a dispersion step of dispersing the aggregated particles by action of second dielectrophoretic force, which is different from the first dielectrophoretic force, an imaging step of capturing a dispersion image including the dispersed particles, and a counting step of determining a number of the particles on a basis of the dispersion image.

In this counting method, particles aggregated by the first dielectrophoretic force are dispersed by the different second dielectrophoretic force. That is, occurrence of false negatives, an example of which is a case where two particles look like one particle because of overlap between the particles due to aggregation, can be suppressed. With the counting method in the present disclosure, therefore, occurrence of false negatives due to aggregation is suppressed, and particles can be counted more accurately.

For example, the first dielectrophoretic force and the second dielectrophoretic force may be different from each other in terms of magnitude.

As a result, with the counting method in the present disclosure, the second dielectrophoretic force, whose magnitude is different from that of the first dielectrophoretic force, is exerted, and aggregated particles can be dispersed. With the counting method in the present disclosure, therefore, occurrence of false negatives due to aggregation is reduced, and particles can be counted more accurately.

For example, in the aggregation step, a first alternating current voltage may be applied to an electrode set that generates an electric field gradient for exerting dielectrophoretic force. In the dispersion step, a second alternating current voltage, which is lower than the first alternating current voltage, may be applied to the electrode set.

As a result, with the counting method in the present disclosure, particles can be aggregated by exerting the first dielectrophoretic force using the first alternating current voltage, and the magnitude of dielectrophoretic force can be reduced and the aggregated particles can be dispersed by exerting the second dielectrophoretic force whose alternating current voltage is lower. With the counting method in the present disclosure, therefore, occurrence of false negatives due to aggregation is reduced, and particles can be counted more accurately.

For example, the second alternating current voltage may be 0 V.

As a result, with the counting method in the present disclosure, particles can be aggregated by exerting the first dielectrophoretic force using the first alternating current voltage, and action of dielectrophoretic force can be stopped and the aggregated particles can be dispersed by exerting the second dielectrophoretic force whose alternating current voltage is 0 V. With the counting method in the present disclosure, therefore, occurrence of false negatives due to aggregation is reduced, and particles can be counted more accurately.

For example, the electrode set may include a first electrode and a second electrode, which is different from the first electrode. In the aggregation step, an alternating current voltage of a first phase may be applied to the first electrode and an alternating current voltage of a second phase, whose first phase difference from the first phase is larger than 0, may be applied to the second electrode. In the dispersion step, an alternating current voltage of a third phase may be applied to the first electrode, and an alternating current voltage of a fourth phase, whose second phase difference from the third phase is smaller than the first phase difference, may be applied to the second electrode.

As a result, with the counting method in the present disclosure, the magnitude of dielectrophoretic force can be adjusted by a phase difference between alternating current voltages applied to the first and second electrodes included in the electrode set. The magnitude of dielectrophoretic force can thus be reduced only by adjusting the phase difference, and aggregated particles can be dispersed. With the counting method in the present disclosure, therefore, occurrence of false negatives due to aggregation is reduced, and particles can be counted more accurately.

For example, the second phase difference may be 0.

As a result, with the counting method in the present disclosure, the action of dielectrophoretic force can be stopped and aggregated particles can be dispersed by making the phase difference between the alternating current voltages applied to the first and second voltages included in the electrode set 0. With the counting method in the present disclosure, therefore, occurrence of false negatives due to aggregation is reduced, and particles can be counted more accurately.

For example, in the aggregation step, two electrodes included in an electrode set that generates an electric field gradient for exerting dielectrophoretic force may be separated from each other by a first distance, and an alternating current voltage may be applied to each of the two electrodes. In the dispersion step, the two electrodes may be separated from each other by a second distance, which is longer than the second distance, and an alternating current voltage may be applied to each of the two electrodes.

As a result, with the counting method in the present disclosure, the magnitude of dielectrophoretic force can be reduced and aggregated particles can be dispersed only by adjusting the distance between the two electrodes included in the electrode set. With the counting method in the present disclosure, therefore, occurrence of false negatives due to aggregation is reduced, and particles can be counted more accurately.

For example, the counting method may further include a preliminary imaging step of capturing an aggregation image including the aggregated particles after the aggregation step but before the dispersion step and a tracking step of tracking the particles included in the captured aggregation image on a basis of the aggregation image and the dispersion image.

As a result, with the counting method in the present disclosure, particles can be counted on the basis of an aggregation image and a dispersion image before and after the particles are dispersed. When particles following different trajectories accidentally overlap each other during the dispersion, for example, the particles can be individually counted on the basis of the different trajectories. With the counting method in the present disclosure, therefore, occurrence of false negatives due to aggregation is reduced, and particles can be counted more accurately.

For example, in the tracking step, whether the particles dispersed in the dispersion step are the particles aggregated at a first position or the particles aggregated at a second position, which is different from the first position, in the aggregation step may be determined.

As a result, with the counting method in the present disclosure, particles aggregated at the first position and the second position can be individually counted. When the first position and the second position are positions at which particles are aggregated through positive dielectrophoresis and negative dielectrophoresis, respectively, for example, the particles aggregated by the action of these different types of dielectrophoresis can be simultaneously and accurately counted. With the counting method in the present disclosure, therefore, occurrence of false negatives due to aggregation is reduced at each of the positions, and particles can be counted simultaneously and more accurately.

For example, in the counting step, particles containing a detection target substance, which is a certain detection target, may be selectively counted among the particles on a basis of the aggregation image and the dispersion image.

As a result, certain particles can be selectively counted in a sample containing different types of particles.

A counting apparatus according to another aspect of the present disclosure includes a storage unit storing a sample containing particles, an electric field gradient generation unit that generates an electric field gradient for the sample stored in the storage unit, a control unit that controls the electric field gradient generation unit such that the generated electric field gradient aggregates the particles by action of first-direction dielectrophoretic force exerted on the particles and disperses the aggregated particles by action of second-direction dielectrophoretic force, which is different from the first-direction dielectrophoretic force, exerted on the aggregated particles, an imaging unit that captures a dispersion image including the dispersed particles, and a counting unit that determines a number of the particles on a basis of the dispersion image.

As a result, a counting apparatus that produces the same effects as those produced by the counting method is achieved.

It should be noted that these general or specific aspects may be implemented as a system, an apparatus, an integrated circuit, a computer program, a computer-readable storage medium such as a CD-ROM, or any selective combination thereof.

Embodiments will be specifically described hereinafter with reference to the drawings.

All the embodiments described hereinafter are general or specific examples. Values, shapes, materials, components, arrangement positions and connection modes of the components, steps, order of the steps, and the like mentioned in the following embodiments are examples and not intended to limit the claims. Each of the figures is not necessarily a strict illustration. In each of the figures, substantially the same components are given the same reference numerals, and redundant description thereof might be omitted or simplified.

In the following description, terms indicating relationships between elements, such as parallel and perpendicular, terms indicating shapes of elements, such as rectangular, and numerical ranges do not just express strict meanings but also imply substantially the same ranges, that is, inclusion of differences of, say, several percent.

In the following description, counting of particles implies not only that particles in a sample are found on the basis of a determination whether the number of particles is 1 or more or 0 and presence of particles is checked but also that the quantity (e.g., number, concentration, etc.) of particles or a range of the quantity of particles is measured. Similarly, counting of a detection target substance implies not only that a detection target substance in a sample is found on the basis of a determination whether the number of the detection target substance is 1 or more or 0 and presence of the detection target substance is checked but also that the quantity (e.g., number, concentration, etc.) of a detection target substance or a range of the quantity of a detection target substance is measured. Particles to be counted may be all particles contained in a sample or a part of particles contained in a sample.

### (Embodiment)

In the present embodiment, overlap between particles due to aggregation is suppressed and the particles are counted by aggregating the particles in a liquid through dielectrophoresis (DEP) and then dispersing the aggregated particles.

DEP is a phenomenon in which force is exerted on dielectric particles exposed to a non-uniform electric field (hereinafter also referred to as an electric field gradient). This force does not require particles to be charged.

An embodiment of a counting apparatus and a counting method that achieve counting of detection target substance particles through DEP will be specifically described hereinafter with reference to the drawings.

### [Configuration of Counting Apparatus]

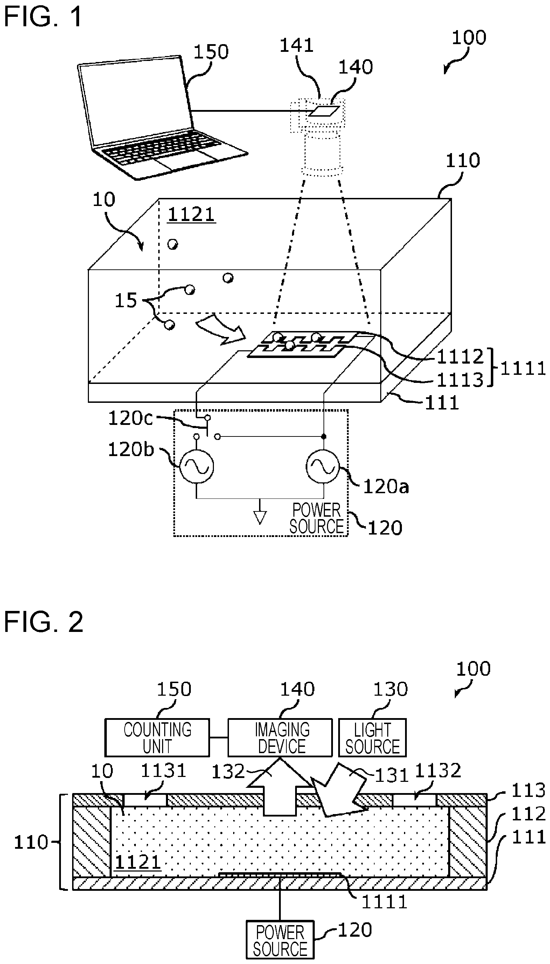

First, the configuration of the counting apparatus will be described with reference to Figs. 1 and 2. Fig. 1 is a perspective view illustrating a schematic configuration of the counting apparatus according to the embodiment. Fig. 2 is a cross-sectional view illustrating the schematic configuration of the counting apparatus according to the embodiment. Fig. 1 especially illustrates an outline while making a part of a storage unit 110 other than a first substrate 111 transparent so that an inside of the storage unit 110 becomes visible. Fig. 1 is used to explain relationships between the storage unit 110 and other components, and does not limit an arrangement position, an arrangement direction, an orientation, and the like of each of the components at a time when a counting apparatus 100 is used. Fig. 2 is a cross-sectional view taken from the storage unit 110 illustrated in Fig. 1 along a direction parallel to a page surface. Thickness of some components of the storage unit 110 illustrated in Fig. 2 is omitted in Fig. 1.

As illustrated in Figs. 1 and 2, the counting apparatus 100 includes the storage unit 110, a power source 120, a light source 130, an imaging device 140, and a counting unit 150.

The storage unit 110 is a container for storing a sample 10 containing particles 15 and includes a space 1121 inside thereof. The sample 10 is stored in the space 1121. DEP acts inside the space 1121 on the sample 10 stored in the space 1121, and the particles 15 contained in the sample 10 move by the action of the DEP. The space 1121 provided inside the storage unit 110 thus serves as a field for DEP in the counting apparatus 100.

Here, the particles 15 are a particulate substance that exhibits dielectric properties, namely a single material substance such as polystyrene beads or glass beads, a composite substance obtained by adding a functional substance to these beads, living cells that can be macroscopically regarded as dielectric particles, or the like. The particles 15 are determined appropriately in accordance with an application of the counting apparatus 100, and various conditions for DEP are set in accordance with physical properties of the particles 15 and the like. Although the particles 15 are assumed to be polystyrene beads in the following description, the configuration and size of the particles 15 are not particularly limited as described above. The counting apparatus 100 can be used for various types of particles 15 as a counting target.

Now, the internal configuration of the storage unit 110 will be described. As illustrated in Fig. 2, the storage unit 110 includes the first substrate 111, a spacer 112, and a second substrate 113.

The first substrate 111 is, for example, a glass or resin sheet. The first substrate 111 has an upper surface that defines a bottom of the space 1121, and an electrode set 1111 to which the power source 120 applies an alternating current voltage is formed on the upper surface. The electrode set 1111 is formed in contact with the space 1121 so that when the sample 10 is stored in the space 1121, the sample 10 and the electrode set 1111 are in electrical contact with each other.

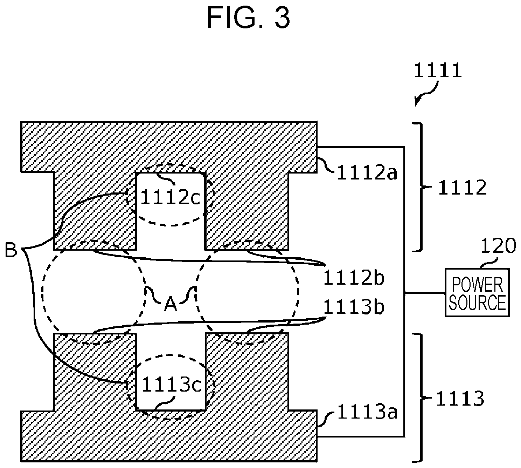

The electrode set 1111 specifically includes a first electrode 1112 and a second electrode 1113. With an alternating current voltage applied to the electrode set 1111 from the power source, the electrode set 1111 can cause (generate or form) a non-uniform electric field (electric field gradient) on the first substrate 111. The electrode set 1111 is thus an example of an electric field gradient generation unit. Details of the electrode set 1111 will be described later with reference to Fig. 3.

The spacer 112 is disposed on the first substrate 111. A through hole corresponding to a shape of the space 1121 is formed in the spacer 112. The space 1121 is formed by the through hole sandwiched by the first substrate 111 and the second substrate 113. That is, the spacer 112 is an outer wall surrounding the through hole and has an inner surface that defines the space 1121. The spacer 112 is composed of, for example, a material with high adhesion to the first substrate 111 and the second substrate 113, such as a resin.

The second substrate 113 is a transparent glass or resin sheet, for example, and disposed on the spacer 112. A polycarbonate substrate, for example, may be used as the second substrate 113. A supply hole 1131 and a discharge hole 1132 connecting to the space 1121 are formed in the second substrate 113. The sample 10 is supplied to the space 1121 through the supply hole 1131 and discharged from the space 1121 through the discharge hole 1132. The storage unit 110 may be achieved without providing the second substrate 113, instead. That is, the second substrate 113 is not a mandatory component. In this case, the space 1121 for establishing the storage unit 110 as a container is formed by only the first substrate 111 and the spacer 112 that define the bottom and the inner surface thereof, respectively.

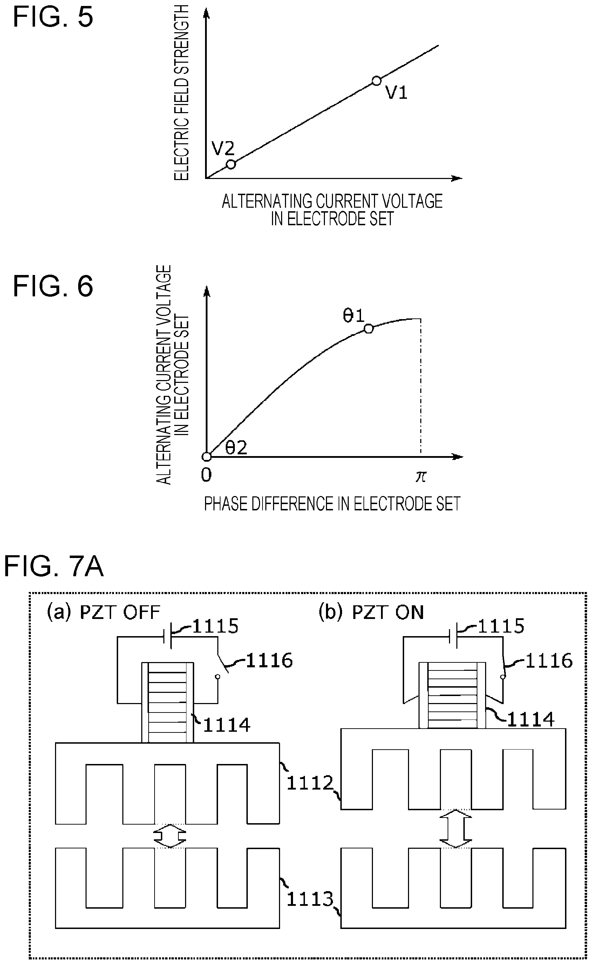

The power source 120 is an alternating current power source and applies an alternating current voltage to the electrode set 1111 on the first substrate 111. As illustrated in Fig. 1, the power source 120 specifically includes a first alternating current source 120a that applies an alternating current voltage to the first electrode 1112 or the first electrode 1112 and the second electrode 1113, a second alternating current source 120b that applies an alternating current voltage to the second electrode 1113, and a switch 120c. The switch 120c is a circuit component for switching between conduction between the first alternating current source 120a and the second electrode 1113 and conduction between the second alternating current source 120b and the second electrode 1113. A detailed operation of the power source 120 will be described later with reference to Fig. 6.

The power source 120 may be any power source insofar as an alternating current voltage can be supplied, and is not limited to a certain power source such as that described above. An alternating current voltage may be supplied from an external power source, and in this case, the power source 120 need not be included in the counting apparatus 100. The internal configuration of the power source 120 is omitted in the following description and illustrated in a simplified manner.

The light source 130 radiates radiation light 131 onto the sample 10 in the space 1121. The radiation light 131 is radiated onto the particles 15 in the sample 10 through the second substrate 113. The particles 15 cause detection light 132 corresponding to the radiation light 131 and are detected by detecting the detection light 132. Excitation light for exciting a certain fluorescent substance, for example, may be radiated as the radiation light 131. When a fluorescent substance is dispersed in polystyrene composing the particles 15, fluorescent light is caused in accordance with the radiated excitation light, and presence of the fluorescent substance, that is, presence of the particles 15, can be detected by detecting the fluorescent light.

A known technique may be used for the light source 130 without a particular limitation. A laser such as a semiconductor laser or a gas laser, for example, may be used as the light source 130. A wavelength of the radiation light 131 radiated from the light source 130 may be one (e.g., 400 nm to 2,000 nm) at which interaction with a substance composing the particles 15 is small. Alternatively, the wavelength of the radiation light 131 may be one (e.g., 600 nm to 850 nm) at which a semiconductor laser can be used.

The light source 130 need not be included in the counting apparatus 100. When the particles 15 are large, for example, the fluorescent substance need not be contained in the particles 15. Because excitation light need not be radiated onto the particles 15 in this case, external light radiated from the sun or a fluorescent lamp can be used as the radiation light 131, and the counting apparatus 100 can be achieved without providing the light source 130.

The imaging device 140 is a CMOS image sensors, a CCD image sensor, or the like incorporated into a camera 141 and generates an image including the particles 15 by detecting the detection light 132 caused by the particles 15. The imaging device 140 is disposed parallel to a surface of the first substrate 111 and captures an image of an area corresponding to the electrode set 1111 through an optical element (not illustrated), such as a lens, included in the camera 141. When particles 15 exist in the area, the detection light 132 caused by radiation light 131 is incident on the imaging device 140, and the particles 15 are detected.

The counting unit 150 obtains an image output from the imaging device 140 and determines the number of particles 15 contained in the sample 10 on the basis of the image. For example, the counting unit 150 detects bright spots, at which luminance values are different, using a control image, which is an image captured in advance that does not include particles 15, by comparing the obtained image and the control image. More specifically, when emission of light is detected as the detection light 132, spots in the obtained image at which luminance values are larger than in the control image are determined as bright spots, and when transmitted light and scattered light are detected as the detection light 132, spots in the obtained image at which luminance values are smaller than in the control image may be detected as bright spots. A result of counting of the particles 15 in the sample 10 can thus be obtained.

The counting unit 150 is achieved, for example, by executing a program for conducting the above-described image analysis using a circuit such as a processor and a storage device such as a memory, but may be achieved by a dedicated circuit, instead.

### [Shape and Arrangement of Electrode Set]

Next, a shape and arrangement of the electrode set 1111 on the first substrate 111 will be described with reference to Fig. 3. Fig. 3 is a plan view illustrating the configuration of the electrode set according to the embodiment. Fig. 3 illustrates the configuration of the electrode set 1111 viewed from the imaging device 140 as a plan. Fig. 3 is a schematic configuration diagram illustrating a part of the electrode set 1111 for the sake of simplicity.

As illustrated in Fig. 3, the electrode set 1111 includes the first electrode 1112 and the second electrode 1113. The first electrode 1112 and the second electrode 1113 are each electrically connected to the power source 120.

The first electrode 1112 includes a first base 1112a extending in a first direction (a page left-and-right direction in Fig. 3) and two first convexes 1112b protruding from the first base 1112a in a second direction (a page top-and-bottom direction in Fig. 3), which intersects with the first direction. A first concave 1112c is formed between the two first convexes 1112b. Lengths of the two first convexes 1112b and the first concave 1112c in the first direction and the second direction are, for example, both about 5 micrometers. Sizes of the two first convexes 1112b and the first concave 1112c are not limited to this.

A shape and a size of the second electrode 1113 are substantially the same as those of the first electrode 1112. That is, the second electrode 1113, too, includes a second base 1113a extending in the first direction (the page left-and-right direction in Fig. 3) and two second convexes 1113b protruding from the second base 1113a in the second direction (the page top-and-bottom direction in Fig. 3), which intersects with the first direction. A second concave 1113c is formed between the two second convexes 1113b. The two second convexes 1113b are disposed in such a way as to face the two first convexes 1112b of the first electrode 1112.

That is, the first electrode 1112 includes the first convexes 1112b protruding from the first base 1112a toward the second electrode 1113 in a direction intersecting with the first direction. The second electrode 1113 includes the second convexes 1113b protruding from the second base 1113a toward the first electrode 1112 in the direction intersecting with the first direction.

The first convexes 1112b and the second convexes 1113b are formed such that a distance between the first electrode 1112 and the second electrode 1113 differs depending on a position in the first direction. Since the distance between the first electrode 1112 and the second electrode 1113 differs, an electric field gradient where electric field strength differs depending on the position, that is, a non-uniform electric field, is formed when an alternating current voltage is applied to the electrode set 1111. That is, it is only required that at least one part where an inter-electrode distance is different be formed in the electrode set 1111. The electrode set 1111 may employ a configuration in which, for example, a convex is formed in the first electrode 1112 or the second electrode 1113 and no convex is formed in the other of the first electrode 1112 and the second electrode 1113. Because the above can be achieved insofar as there is at least one convex, the electrode set 1111 can be achieved by the first electrode 1112 or the second electrode 1113 including at least one convex.

A position of the electrode set 1111 is not limited to on the first substrate 111. The electrode set 1111 may be provided near the space 1121 without being in contact with the sample 10, instead. Here, near the space 1121 refers to a range within which an electric field gradient can be formed in the sample 10 with an alternating current voltage applied to the electrode set 1111.

An electric field gradient is formed as a result of the configuration of the electrode set 1111, and when the particles 15 in the sample 10 are exposed to the electric field, the particles 15 are aggregated in certain areas through DEP. In the DEP, the certain areas in which the particles 15 are aggregated differ depending on whether positive DEP or negative DEP acts on the particles 15 when an electric field gradient is formed.

More specifically, when positive DEP acts on the particles 15, the particles 15 move to areas where electric field strength is high and aggregate. The areas where electric field strength is high are areas including positions at which the distance between the first electrode 1112 and the second electrode 1113 is shortest because of the first convexes 1112b and the second convexes 1113b and, for example, are first electric field areas A indicated in the figure by broken-line circles. When negative DEP acts on the particles 15, on the other hand, the particles 15 move to areas where electric field strength is low and aggregate. The areas where electric field strength is low are areas including positions at which the distance between the first electrode 1112 and the second electrode 1113 is longest because of the first convexes 1112b and the second convexes 1113b. More specifically, the areas where electric field strength is low are areas between first concaves 1112c and second concaves 1113c. In particular, the further from the first electric field areas A, the lower the electric field strength. That is, in the figure, for example, particles 15 acted on by negative DEP aggregate in second electric field areas B indicated by broken-line circles.

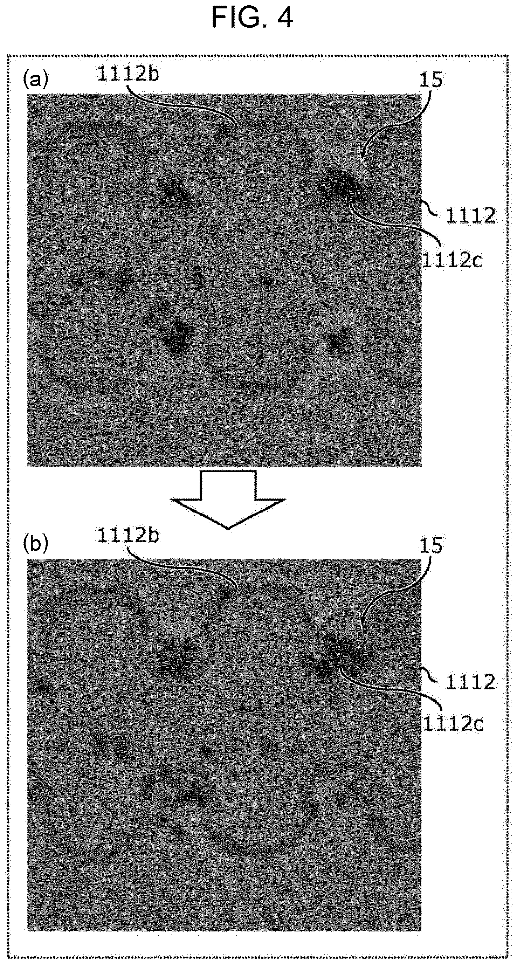

Fig. 4 is a diagram illustrating aggregation and dispersion of particles according to the embodiment. Fig. 4(a) is a diagram illustrating particles 15 aggregated through DEP. Fig. 4(b) is a diagram illustrating particles 15 dispersed through DEP. Fig. 4 illustrates images of the first electrode 1112 viewed from the same direction as in Fig. 3, and the particles 15 are shown in the figure as black spots. The first convexes 1112b protrude from the first electrode 1112 in the figure upward and downward. Although not illustrated in Fig. 4, the second electrode 1113 will be described as existing outside the figure in a top-and-bottom direction, in which the first convexes 1112b protrude.

As illustrated in Fig. 4(a), most of the particles 15 are aggregated in the first concaves 1112c through DEP. This is because negative DEP has acted on the particles 15 and the particles 15 have moved to and aggregated in areas where electric field strength is low. As illustrated in the figure, when a large number of particles 15 exist in the sample 10, the particles 15 might overlap one another and not be accurately counted through only one type of DEP.

In the present embodiment, the second dielectrophoretic force different from the first dielectrophoretic force is exerted on particles 15 aggregated by the first dielectrophoretic force to disperse the aggregated particles 15 as described above. As illustrated in Fig. 4(b), the overlap between the particles 15 is suppressed through the dispersion, and the particles 15 can be counted more accurately. The first dielectrophoretic force and the second dielectrophoretic force are different from each other, for example, in terms of the magnitude of dielectrophoretic force. That is, the particles 15 are aggregated by first dielectrophoretic force that is large dielectrophoretic force in certain electric field areas where electric field strength is high or low, and then force of aggregation is reduced by second dielectrophoretic force that is small dielectrophoretic force to disperse the particles 15 from the certain electric field areas. The counting apparatus 100 according to the present embodiment can thus accurately count the particles 15 with this method.

### [Change from First Dielectrophoretic Force to Second Dielectrophoretic Force]

In an example, the first dielectrophoretic force and the second dielectrophoretic force are different from each other in terms of the magnitude of dielectrophoretic force. More specifically, in the above example, the magnitude of the second dielectrophoretic force is smaller than that of the first dielectrophoretic force. In order to change the first dielectrophoretic force to the second dielectrophoretic force, therefore, dielectrophoretic force needs to be reduced. Methods for changing the magnitude of dielectrophoretic force like this will be described with reference to Figs. 5 to 7B.

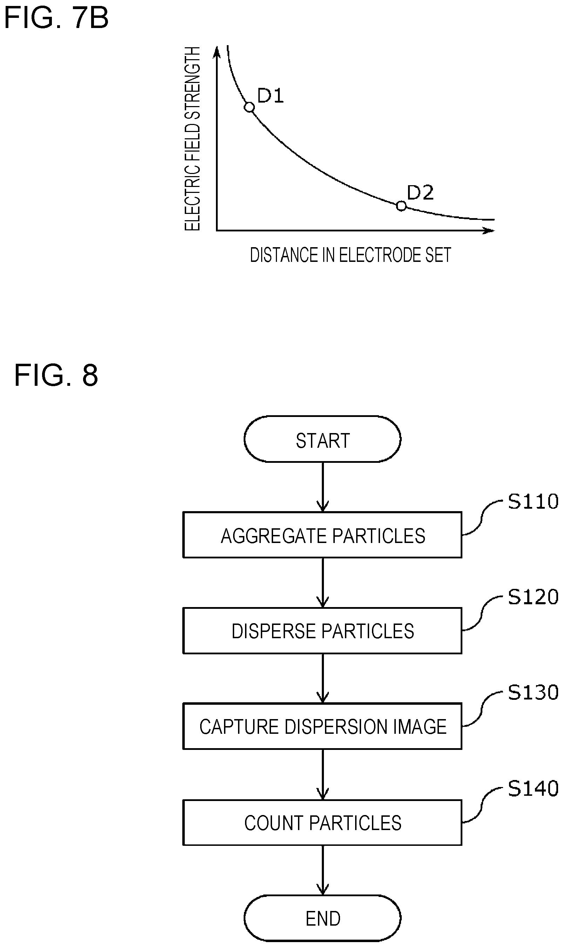

Fig. 5 is a first diagram illustrating a change in dielectrophoretic force according to the embodiment. Fig. 6 is a second diagram illustrating a change in dielectrophoretic force according to the embodiment. Fig. 7A is a third diagram illustrating a change in dielectrophoretic force according to the embodiment. Fig. 7B is a fourth diagram illustrating a change in dielectrophoretic force according to the embodiment.

Dielectrophoretic force correlates with overall electric field strength of an electric field gradient. The lower the overall electric field strength, the lower the dielectrophoretic force, and the higher the overall electric field strength, the higher the dielectrophoretic force. It is therefore important to reduce overall electric field strength in order to reduce dielectrophoretic force. As illustrated in Fig. 5, electric field strength is proportional to an alternating current voltage applied to the electrode set 1111. That is, by reducing the alternating current voltage applied to the electrode set 1111, the electric field strength becomes lower, and the dielectrophoretic force also becomes lower.

When the first dielectrophoretic force is exerted, for example, a first alternating current voltage V1 is applied to the electrode set 1111 to aggregate the particles 15, and when the second dielectrophoretic force is exerted thereafter, the particles 15 can be dispersed by applying a second alternating current voltage V1, which is lower than the first alternating current voltage V1, to the electrode set 1111. A maximum value of the second alternating current voltage V2 may be smaller than that of the first alternating current voltage V1. Alternatively, an effective value of the second alternating current voltage V2 may be smaller than that of the first alternating current voltage V1.

In order to switch the alternating current voltage applied to the electrode set 1111 to a lower alternating current voltage, for example, a phase difference between alternating current voltages applied to the first electrode 1112 and the second electrode 1113 is adjusted. Fig. 6 illustrates a relationship between a potential difference caused in the electrode set 1111 and the phase difference between the alternating current voltages applied to the first electrode 1112 and the second electrode 1113. The potential difference caused in the electrode set 1111 corresponds to amplitude of the alternating current voltage applied to the electrode set 1111. The alternating current voltage applied to the electrode set 1111, therefore, becomes lower and an electric field gradient whose electric field strength is lower is formed as the potential difference in the electrode set 1111 becomes smaller. The alternating current voltage applied to the electrode set 1111 becomes higher and an electric field gradient whose electric field strength is higher is formed as the potential difference in the electrode set 1111 becomes larger.

It is to be noted that Fig. 6 illustrates a relationship between a phase difference between a phase of the alternating current voltage applied to the first electrode 1112 and a phase of the alternating current voltage applied to the second electrode and the alternating current voltage applied to the electrode set in a case, for example, where alternating current voltages having the same voltage waveform are applied to the first electrode 1112 and the second electrode 1113.

Now, a phase difference larger than π but smaller than 2π, which is not illustrated in Fig. 6, will also be described. An increase (toward 2π) in the phase difference within this range is essentially synonymous with a decrease in the phase difference. That is, the second phase difference that is smaller than the first phase difference is a concept including a second phase difference larger than or equal to 0 but smaller than the first phase difference at a time when the first phase difference is larger than or equal to 0 but smaller than or equal to π and a second phase difference larger than the first phase difference but smaller than or equal to 2π at a time when the first phase difference is larger than π but smaller than 2π.

As illustrated in Fig. 6, the relationship between the potential difference caused in the electrode set 1111 and the phase difference between the alternating current voltages applied to the first electrode 1112 and the second electrode 1113 draws a curve whose maximum value is observed when the phase difference is π. When the first dielectrophoretic force is exerted, for example, an alternating current voltage of a first phase is applied to the first electrode 1112, and an alternating current voltage of a second phase, whose phase difference from the first phase is a first phase difference θ1, is applied to the second electrode 1113. The first phase difference θ1 is larger than 0 and causes a potential difference, that is, a voltage in the electrode set 1111, and positive or negative DEP acts on the particles 15. The particles 15 are thus aggregated.

With the configuration of the power source 120 illustrated in Fig. 1, for example, the first alternating current source 120a applies an alternating current voltage of the first phase to the first electrode 1112, and the second alternating current source 120b, which is electrically conductive to the second electrode 1113 via the switch 120c, applies an alternating current voltage of the second phase to the second electrode 1113.

Fig. 6 will be referred to again. Next, when the second dielectrophoretic force is exerted, an alternating current voltage of a third phase is applied to the first electrode 1112, and an alternating current voltage of a fourth phase, whose phase difference from the third phase is a second phase difference θ2 smaller than the first phase difference θ1, is applied to the second electrode 1113. The second phase difference θ2 is 0 in the illustrated example. A voltage waveform of the alternating current voltage of the third phase and a voltage waveform of the alternating current voltage of the fourth phase are the same, and since a phase difference is 0, an alternating current voltage of 0 V is applied to the electrode set 1111. That is, in this example, voltage is essentially in an off state, and dielectrophoretic force having zero magnitude is exerted. In this case, aggregated particles 15 are dispersed because spontaneous dispersion force is caused by Brownian motion of the particles 15 and the like. The present disclosure thus includes exertion of dielectrophoretic force having zero magnitude as the second dielectrophoretic force.

The particles 15 aggregated by the first dielectrophoretic force are dispersed by the second dielectrophoretic force having smaller magnitude, and overlap between the particles 15 is suppressed. A condition that can lead to false negatives can thus be alleviated, and the particles 15 can be counted more accurately.

With the configuration of the power source 120 illustrated in Fig. 1, for example, the switch 120c operates, and the first alternating current source 120a applies an alternating current voltage of the first phase to both the first electrode 1112 and the second electrode 1113. Since the in-phase alternating current voltages are applied, a phase difference in the electrode set 1111 becomes 0, and voltage essentially enters an off state. That is, the switch 120c is an example of a control unit that controls the electrode set 1111 such that the first dielectrophoretic force is exerted on particles 15 to aggregate the particles 15 and the second dielectrophoretic force is exerted on the particles 15 to disperse the particles 15. Although both the third phase and the fourth phase are the same as the first phase in this example, these phases may be different from each other, instead. Even when the first phase and the third phase are different from each other, the second phase difference smaller than the first phase difference can be achieved on the basis of setting of the fourth phase. Even when the third phase and the fourth phase are different from each other, the second phase difference smaller than the first phase difference can be achieved insofar as the first phase difference is sufficiently large.

The second dielectrophoretic force may be exerted by simply reducing the alternating current voltage supplied from the power source 120 without adjusting the phase difference. In this case, the power source 120 may include only the first alternating current source 120a. A terminal of the first alternating current source 120a is connected to the first electrode 1112, and another terminal is connected to the second electrode 1113. That is, the power source 120 in this case generates only one alternating current voltage.

An example will be described hereinafter where the second dielectrophoretic force is exerted by reducing the electric field strength by a principle different from that described above. As illustrated in Fig. 7A, the electric field strength is inversely proportional to a distance in the electrode set 1111. That is, by increasing the distance in the electrode set 1111, the electric field strength is reduced, and the dielectrophoretic force can be reduced.

When the first dielectrophoretic force is exerted, for example, the particles 15 may be aggregated by applying an alternating current voltage with the distance in the electrode set 1111 set as a first distance D1, and when the second dielectrophoretic force is exerted, the particles 15 may be dispersed by applying an alternating current voltage with the distance in the electrode set 1111 set as a second distance D2.

A change in the distance in the electrode set 1111 is achieved, for example, using an actuator such as a piezo actuator 1114. Fig. 7B illustrates a configuration employing the piezo actuator 1114. Fig. 7B is a plan view in which the first electrode 1112 and the second electrode 1113 are viewed from the same direction as in Fig. 3.

As illustrated in Fig. 7B, the piezo actuator 1114 is connected to the first electrode 1112. The first electrode 1112 is not fixed on the first substrate 111 and provided in such a way as to be movable by the piezo actuator 1114. The second electrode 1113, on the other hand, is fixed on the first substrate 111. The distance in the electrode set 1111 is thus adjusted by moving the first electrode 1112 relative to the fixed second electrode 1113.

More specifically, Fig. 7B(a) illustrates a state where a piezo driver including a power source 1115 and a switch 1116 is not applying a voltage to the piezo actuator 1114. As illustrated in the figure, when a voltage is not applied to the piezo actuator 1114, a distance between the first electrode 1112 and the second electrode 1113 becomes relatively short (e.g., the first distance D1), and the electric field strength in the electrode set 1111 is kept high.

Next, Fig. 7B(b) illustrates a state where the piezo driver is applying a voltage to the piezo actuator 1114. As illustrated in the figure, when a voltage is applied to the piezo actuator 1114, the distance between the first electrode 1112 and the second electrode 1113 becomes relatively long (e.g., the second distance D2), and the electric field strength in the electrode set 1111 decreases. The switch 1116 for turning on and off the piezo actuator 1114 is thus another example of the control unit that controls the electrode set 1111 such that the first dielectrophoretic force is exerted on the particles 15 to aggregate the particles 15 and the second dielectrophoretic force is exerted on the particles 15 to disperse the particles 15.

Another piezo actuator and another piezo driver may be connected to the second electrode 1113, and a longer second distance may be achieved by moving the second electrode 1113 along with the first electrode 1112, instead. An actuator other than the piezo actuator 1114 may be used as the actuator, instead.

As described above, aggregated particles 15 are dispersed by changing the first dielectrophoretic force to the smaller second dielectrophoretic force. The first dielectrophoretic force and the second dielectrophoretic force may be different from each other in terms of not the magnitude but the direction of dielectrophoretic force. The first dielectrophoretic force and the second dielectrophoretic force may be different from each other in terms of both the magnitude and the direction of the dielectrophoretic force. When the first dielectrophoretic force and the second dielectrophoretic force are different from each other in terms of the direction of the dielectrophoretic force, the second dielectrophoretic force may be larger than the first dielectrophoretic force.

### [Counting Method Employing Counting Apparatus]

A method for counting the particles 15 using the counting apparatus 100 configured as above will be described with reference to Fig. 8. Fig. 8 is a flowchart illustrating the counting method according to the embodiment.

First, positive or negative first dielectrophoretic force is exerted on a sample 10 containing particles 15 to aggregate the particles 15 at certain positions (aggregation step S 110). Second dielectrophoretic force, which is different from the first dielectrophoretic force, is then exerted to disperse the aggregated particles 15 (dispersion step S120). More specifically, as described above, second dielectrophoretic force different from the first dielectrophoretic force exerted in aggregation step S110 in terms of the magnitude, the direction, and the like is exerted. Since force exerted to aggregate the particles 15 changes, the aggregation based on the first dielectrophoretic force changes, and overlap between the particles 15 is suppressed.

Next, the imaging device 140 receives the detection light 132 to capture an image (imaging step S130). The image captured in imaging step S130 is a dispersion image including the dispersed particles 15. The counting unit 150 conducts an image analysis on the dispersion image to determine the number of particles 15 in the sample 10 (counting step S140).

Occurrence of false negatives due to overlap between the particles 15 in the sample 10 is thus suppressed, and the particles 15 can be counted more accurately.

### [Modification]

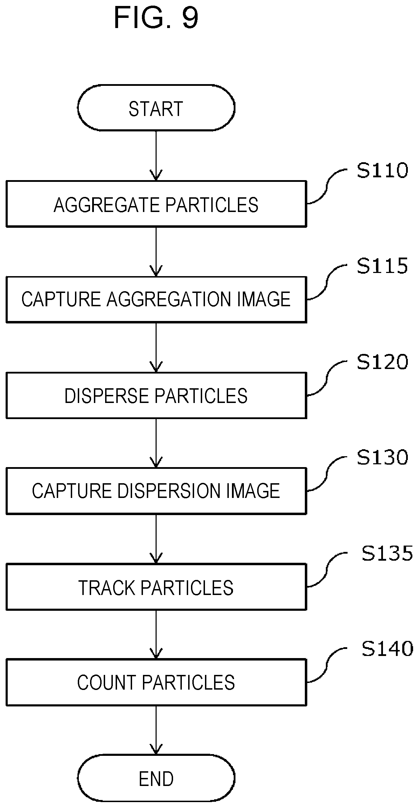

A modification of the present embodiment will be further described with reference to Figs. 9 to 12. In the following description, differences from the description of the embodiment will be mainly described, and redundant description is omitted or simplified. Fig. 9 is a flowchart illustrating a counting method according to the modification of the embodiment. The counting method according to the modification illustrated in Fig. 9 is different from that according to the embodiment in that preliminary imaging step S115 and tracking step S135 are performed.

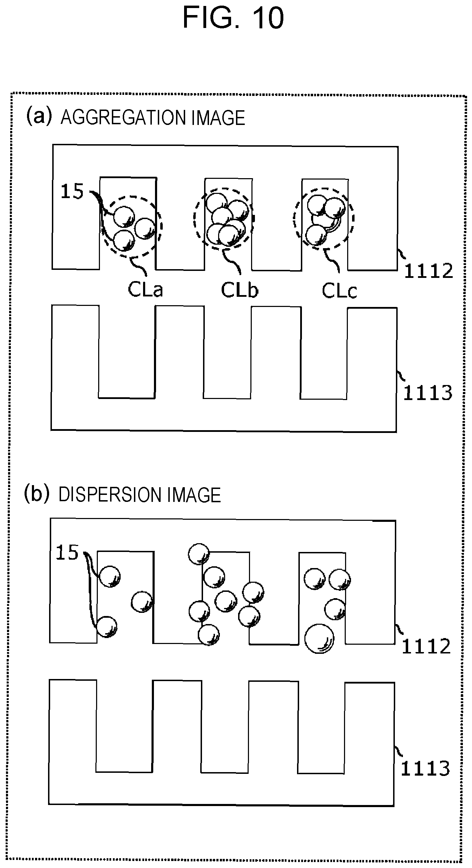

More specifically, after the particles 15 in the sample 10 are aggregated in aggregation step S 110, but before dispersion step S 120 is performed, the imaging device 140 receives the detection light 132 to capture an image (preliminary imaging step S115). The image captured in preliminary imaging step S115 is an aggregation image including the aggregated particles 15. Fig. 10 is a diagram illustrating an aggregation image and a dispersion image according to the modification of the embodiment. As illustrated in Fig. 10(a), particles 15 are aggregated in first concaves 1112c of a first electrode 1112 in the aggregation image according to the present modification by the action of negative DEP as the first dielectrophoretic force. If the first electrode 1112 includes two or more first concaves 1112c at this time, particles 15 aggregate in each of the first concaves 1112c to form a cluster as illustrated in the figure. In the figure, for example, a first cluster CLa, a second cluster CLb, and a third cluster CLc are formed in three first concaves 1112c, respectively.

When the particles 15 aggregate in separate clusters like this, overlap between the particles 15 can be reduced compared to when the particles 15 aggregate in one area. That is, occurrence of false negatives can be suppressed, and the particles can be counted more accurately. The above description also holds true when positive DEP acts as the first dielectrophoretic force.

In the present modification, the particles 15 are dispersed by the second dielectrophoretic force, and the dispersion image illustrated in Fig. 10(b) is captured (dispersion step S120 and imaging step S130). Furthermore, the counting unit 150 obtains the aggregation image and the dispersion image output in the above manner and tracks the particles 15 included in the aggregation image on the basis of these images (tracking step S135). In tracking step S 135, whether each of the particles 15 dispersed in dispersion step S120 is a particle 15 included in the first cluster CLa aggregated at a first position, a particle 15 included in the second cluster CLb aggregated at a second position, or a particle 15 included in the third cluster CLc aggregated at a third position in aggregation step S110 can be determined.

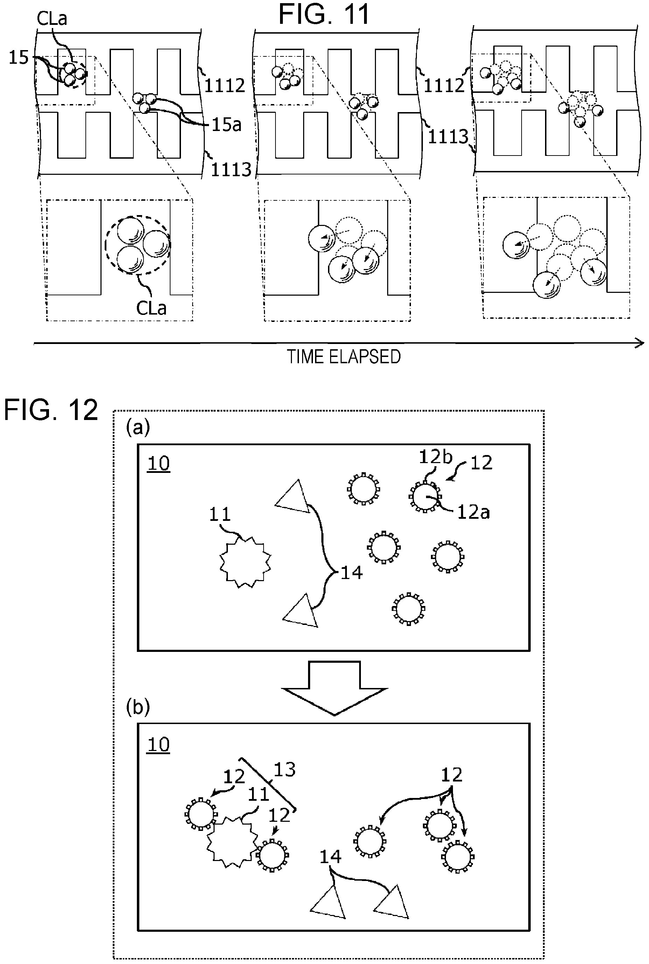

Fig. 11 is a diagram illustrating the tracking step according to the modification of the embodiment. The figure includes plan views of the electrode set 1111 viewed from the same point of view as in Fig. 3 and enlarged views obtained by enlarging the first cluster CLa in the plan views. The figure illustrates, from the left to the right of the figure, images obtained in time series. A left image is an aggregation image, and center and right images are dispersion images. Although the first cluster CLa will be described as an example here, the same holds for the second cluster CLb, the third cluster CLc, and other clusters. The counting unit 150 operates in tracking step S135 as follows.

First, bright spots of particles 15 or bright spots of a cluster including the particles 15 are detected in an aggregation image. The bright spots are detected by identifying pixels with which, as described above, a difference in a luminance value from a control image is larger than or equal to a threshold. Since the particles 15 might overlap one another, each of the particles 15 need not be individually detected.

Next, bright spots of the particles 15 are detected in a dispersion image. Unlike in the aggregation image, the particles 15 can be substantially individually detected in the dispersion image, which is obtained after dispersion. Detectability of the particles 15 improves especially by making time from a beginning of the dispersion to the obtaining of the dispersion image sufficiently long. When the time from the beginning of the dispersion to the obtaining of the dispersion image is made excessively long, however, particles 15 from different clusters might not be distinguished from one another, and tracking of the particles 15 might become impossible. Because dispersion speed of the particles 15 depends on properties of the particles 15, appropriate time from the beginning of the dispersion to the obtaining of the dispersion image may be set in advance on the basis of a preliminary experiment or the like. Alternatively, the imaging device 140 may output a moving image consisting of successively obtained images, and the counting unit 150 may extract dispersion images at timings at which the particles 15 have appropriately dispersed and track and count the particles 15.

The counting unit 150 estimates movement vectors on the basis of the bright spots of the particles 15 detected in the dispersion image using an algorithm for pattern matching or the like and identifies a cluster from which each of the particles 15 has been dispersed. As a result, the number of particles 15 included in each cluster can be counted for the cluster. Especially in a condition where clusters include both clusters of particles 15a aggregated through negative DEP and clusters of particles 15 aggregated through positive DEP as illustrated in the figure, accurate counting can be performed simultaneously and individually.

An example of an application of the above-described counting method according to the above-described modification will be described with reference to Fig. 12. Fig. 12 is a diagram illustrating a process for forming a composite according to the modification of the embodiment. In this example, each of the particles 15 is a composite particle 13, and each of the particles 15a is an unbound particle 12 or an impurity 14.

Each of the particles 15 may be an unbound particle 12 or an impurity 14, and each of the particles 15a may be a composite particle 13.

In this example, particles are counted using the counting apparatus 100 for the purpose of counting a detection target substance 11. That is, among particles in a sample 10, particles containing a detection target substance, which is a certain detection target, are selectively counted.

A composite particle 13 is a combination of the detection target substance 11 and dielectric particles 12a modified by a substance (hereinafter referred to as a specific binding substance 12b) having a property of specifically binding to the detection target substance 11. That is, in a composite particle 13, the detection target substance 11 and dielectric particles 12a bind to each other through the specific binding substance 12b. The dielectric particles 12a have the same configuration as the particles 15.

The specific binding substance 12b is a substance that can specifically bind to the detection target substance 11. Examples of the combination between the detection target substance 11 and the specific binding substance 12b include an antigen and an antibody, a substrate or a coenzyme and an enzyme, a hormone and a receptor, an antibody and protein A or protein G, biotin and avidin, calcium and calmodulin, a sugar and a lectin, and a peptide tag such as 6× histidine or glutathione S-transferase and a tag binding substance such as nickel-nitrilotriacetic acid or glutathione.

An unbound particle 12 is a dielectric particle 12a modified by a specific binding substance 12b that is not a part of a composite particle 13. That is, an unbound particle 12 is a dielectric particle 12a modified by a specific binding substance 12b that is not bound to a detection target substance 11. An unbound particle 12 is also called a free (F) component. A dielectric particles 12a included in the composite particle 13 is also called a bind (B) component.

An impurity 14 is a particle, such as dust, mixed in a detection system (the sample 10 here), a broken-piece particle of one of the components of the counting apparatus 100, or the like.

As illustrated in Fig. 12(a), a sample 10 containing a detection target substance 11 such as virus particles, dielectric particles 12a (unbound particles 12) modified by an antivirus antibody as a specific binding substance 12b, and impurities 14, for example, is prepared. In the sample 10, as illustrated in Fig. 12(b), the detection target substance 11 and the unbound particles 12 form composite particles 13 as a result of dispersion and collision in a solution. At this time, the unbound particles 12 are provided in excess so that no unbound detection target substance 11 remains. For this reason, as illustrated in the figure, the unbound particles 12 exist in excess.

Here, if operation conditions of the counting apparatus 100 are set such that either positive DEP or negative DEP acts on the composite particles 13 and another of the positive DEP or the negative DEP acts on the unbound particles 12 and the impurities 14, the composite particles 13 and the other particles aggregate while forming different clusters. The operation conditions are set by an alternating current voltage applied to an electrode set. For example, operation conditions in which the composite particles 13 correspond to the particles 15 and the other particles correspond to the particles 15a are used. In this example, a detection target substance 11, which is a certain detection target among particles contained in a sample 10, can be selectively and accurately counted by aggregating the composite particles 13 and the other particles at different positions and then accurately counting the composite particle 13 and the other particles after dispersion.

### (Other Embodiments)

Although the counting apparatus and the counting method according to one or more aspects of the present disclosure have been described above on the basis of an embodiment, the present disclosure is not limited to the embodiment. The scope of the one or more aspects of the present disclosure may also include modes obtained by modifying the present embodiment in various ways conceivable by those skilled in the art, insofar as the spirit of the present disclosure is not deviated from.

Although the first convexes and the second convexes face each other and the first concaves and the second concaves face each other in the arrangement of the electrode set on the first substrate in the embodiment, for example, the arrangement of the electrode set is not limited to this. For example, the first convexes and the second concaves may face each other, and the first concaves and the second convexes may face each other in the arrangement, instead. The electrode set may be configured such that electric field gradients suitable for various types of counting are formed on the basis of the arrangement of the electrode set and design of shapes of the first and second electrodes, instead.

The number of electrodes included in the electrode set is not limited to two, and may be three or more, instead. For example, the electrode set illustrated in Fig. 4 also includes second electrodes disposed outside the figure at both ends of a page top-and-bottom direction, in addition to the first electrode in the figure described above. Such an electrode set includes three or more electrodes, and a phase difference is provided between alternating current voltages applied to adjacent electrodes. Such an electrode set is sometimes called castellated electrodes.

Aggregated particles may be dispersed more effectively by combining together some of the methods, which have been described above, for changing the first dielectrophoretic force to the second dielectrophoretic force.

### Industrial Applicability

Applicable as a counting apparatus that counts dielectric particles.

### Reference Signs List

10 sample
11 detection target substance
12 unbound particle
12a dielectric particle
12b specific binding substance
13 composite particle
14 impurity
15, 15a particle
100 counting apparatus
110 storage unit
111 first substrate
112 spacer
113 second substrate
120, 1115 power source
120a first alternating current source
120b second alternating current source
120c, 1116 switch
130 light source
131 radiation light
132 detection light
140 imaging device
141 camera
150 counting unit
1111 electrode set
1112 first electrode
1112a first base
1112b first convex
1112c first concave
1113 second electrode
1113a second base
1113b second convex
1113c second concave
1114 piezo actuator
1121 space
1131 supply hole
1132 discharge hole
CLa first cluster
CLb second cluster
CLc third cluster

## Claims

1. A counting method comprising:
an aggregation step of aggregating particles in a sample by action of first dielectrophoretic force;
a dispersion step of dispersing the aggregated particles by action of second dielectrophoretic force, which is different from the first dielectrophoretic force;
an imaging step of capturing a dispersion image including the dispersed particles; and
a counting step of determining a number of the particles on a basis of the dispersion image,
wherein magnitude of the second dielectrophoretic force is 0 or smaller than magnitude of the first dielectrophoretic force.

2. The counting method according to claim 1,
wherein, in the aggregation step, a first alternating current voltage is applied to an electrode set that generates an electric field gradient for exerting dielectrophoretic force, and
wherein, in the dispersion step, a second alternating current voltage, which is lower than the first alternating current voltage, is applied to the electrode set.

3. The counting method according to claim 2,
wherein the second alternating current voltage is 0 V.

4. The counting method according to claim 2 or 3,
wherein the electrode set includes a first electrode and a second electrode, which is different from the first electrode,
wherein, in the aggregation step, an alternating current voltage of a first phase is applied to the first electrode and an alternating current voltage of a second phase, whose first phase difference from the first phase is larger than 0, is applied to the second electrode, and
wherein, in the dispersion step, an alternating current voltage of a third phase is applied to the first electrode, and an alternating current voltage of a fourth phase, whose second phase difference from the third phase is smaller than the first phase difference, is applied to the second electrode.

5. The counting method according to claim 4,
wherein the second phase difference is 0.

6. The counting method according to any of claims 1 to 5,
wherein, in the aggregation step, two electrodes included in an electrode set that generates an electric field gradient for exerting dielectrophoretic force are separated from each other by a first distance, and an alternating current voltage is applied to each of the two electrodes, and
wherein, in the dispersion step, the two electrodes are separated from each other by a second distance, which is longer than the second distance, and an alternating current voltage is applied to each of the two electrodes.

7. The counting method according to any of claims 1 to 6, further comprising:
a preliminary imaging step of capturing an aggregation image including the aggregated particles after the aggregation step but before the dispersion step; and
a tracking step of tracking the particles included in the captured aggregation image on a basis of the aggregation image and the dispersion image.

8. The counting method according to claim 7,
wherein, in the tracking step, whether each of the particles dispersed in the dispersion step is the particle aggregated at a first position or the particle aggregated at a second position, which is different from the first position, in the aggregation step is determined.

9. The counting method according to claim 7 or 8,
wherein, in the counting step, particles containing a detection target substance, which is a certain detection target, are selectively counted among the particles on a basis of the aggregation image and the dispersion image.

10. A counting apparatus comprising:
a storage unit storing a sample containing particles;
an electric field gradient generation unit that generates an electric field gradient for the sample stored in the storage unit;
a control unit that controls the electric field gradient generation unit such that the generated electric field gradient aggregates the particles by action of first-direction dielectrophoretic force exerted on the particles and disperses the aggregated particles by action of second-direction dielectrophoretic force, which is different from the first-direction dielectrophoretic force, exerted on the aggregated particles;
an imaging unit that captures a dispersion image including the dispersed particles; and
a counting unit that determines a number of the particles on a basis of the dispersion image,
wherein magnitude of the second dielectrophoretic force is 0 or smaller than magnitude of the first dielectrophoretic force.
